# EUROPÄISCHE PATENTSCHRIFT

(11) **EP 1 184 469 B1**
(45) Veröffentlichungstag und Bekanntmachung des Hinweises auf die Patenterteilung: **22.03.2006**
(21) Anmeldenummer: 01118022.1
(22) Anmeldetag: 25.07.2001
(51) Int. Cl.: C22B 7/02, C22B 5/04, C21C 5/52, C22B 1/244, C22B 5/10, C22B 1/245, C21B 13/12

(54) **Verfahren zur Behandlung wertstoffhaltigen Staubes aus der Stahlherstellung**
Process for the treatment of metal values containing dust from steelmaking
Procédé pour le traitement de poussières sidérurgiques contenant des valeurs métalliques

(30) Priorität: 28.08.2000 DE 10042112
(43) Veröffentlichungstag der Anmeldung: 06.03.2002
(73) Patentinhaber: SMS Demag AG, 40237 Düsseldorf (DE)
(72) Erfinder: Reichel, Jan, Dr.Ing.Habil,, 40489 Düsseldorf (DE); Götzinger, Karl Reiner, Dipl.-Ing., 47445 Repelen (DE)
(74) Vertreter: Hemmerich, Friedrich Werner

(56) Entgegenhaltungen:
- EP-A- 0 275 863
- EP-A- 0 960 952
- DE-A- 2 253 454
- US-A- 1 661 636
- US-A- 3 725 034
- US-A- 5 087 293
- DATABASE WPI Section Ch, Week 197419 Derwent Publications Ltd., London, GB; Class M26, AN 1974-35666V XP002213069 & JP 49 015529 B (NIPPON KOKAN KK), 16. April 1974 (1974-04-16)
- DATABASE WPI Section Ch, Week 200016 Derwent Publications Ltd., London, GB; Class H09, AN 2000-180863 XP002213070 & RU 2 123 029 C (LURII V G), 10. Dezember 1998 (1998-12-10)
- DATABASE WPI Section Ch, Week 199822 Derwent Publications Ltd., London, GB; Class M22, AN 1998-249645 XP002213071 & RU 2 092 572 C (PATENTEE NOT GIVEN), 10. Oktober 1997 (1997-10-10)

## Beschreibung

Die Erfindung betrifft ein Verfahren zur Behandlung wertstoffhaltigen Staubes, insbesondere zur Rückgewinnung wertstoffhaltiger Bestandteile aus bei der Stahlherstellung anfallenden Staubes.

Bei der Stahlherstellung kann in einer Vielzahl von Verarbeitungsschritten infolge der jeweils durchzuführenden Oxidations- oder sonstigen Prozeßschritte Staub anfallen. Dieser Staub, insbesondere der sogenannte sekundärmetallurgische Staub, kann einen vergleichsweise hohen Anteil an Verbindungen hochwertiger Elemente wie beispielsweise Chrom und/oder Nickel aufweisen. Diese Anteile können einerseits bei einer Freisetzung in die Umwelt zu einer vergleichsweise hohen Umweltbelastung führen. Andererseits stellen die entsprechenden Elemente einen besonders hochwertigen Anteil des eigentlich herzustellenden Stahlprodukts dar, so daß ihre Bereitstellung einen vergleichsweise hohen Anteil der Produktionskosten für den jeweiligen Stahl ausmachen kann.

Aus diesen Gründen kann es bei der Stahlherstellung von besonderer Bedeutung sein, die sogenannten sekundärmetallurgischen Stäube in der Art eines Recyclings einer Wiederverwertung zuzuführen, um die hochwertigen Bestandteile wie beispielsweise Chrom und/oder Nickel in dementsprechender Form aus dem Staub herauszufiltern und für einen erneuten Einsatz in der Stahlherstellung zurückzugewinnen. Dadurch ist einerseits eine Freisetzung der Stoffe in belastender Weise an die Umwelt sicher vermieden, wobei andererseits eine Senkung der Bereitstellungskosten für die genannten Materialien erreichbar ist.

Die hochwertigen Anteile der genannten Stäube umfassen üblicherweise Chromoxid, Eisenoxid, Manganoxid, und/oder Nickeloxid und können auch elementare Metallbestandteile wie beispielsweise reines Nickel aufweisen. Zum Recycling oder zur Wiedergewinnung der hochwertigen Bestandteile werden die genannten Metallkomponenten üblicherweise durch ein Reduktionsverfahren auf der Basis von terneren Komponentsystemen zurückgewonnen. Als Reduktionsmittel werden dabei üblicherweise Stoffe wie beispielsweise Ferrosilizium, Kalk und/oder Fluorspar und Dolomit eingesetzt. Diese Materialien sind jedoch einerseits vergleichsweise teuer in der Bereitstellung und bedingen andererseits ein vergleichsweise aufwendiges Reduktionsverfahren als solches.

Aus der US-A-3725034 ist ein Verfahren zur Reduktion von Eisenoxid zu Eisen bekannt, wobei dem Eisenoxid ein Kohlenstoffträger in Form von kalzinierter Kohle zugemischt und diese Mischung mit Hilfe eines bituminösen Bindemittels zu Formlingen (Grünbriketts) verpresst wird. Durch ein nachfolgende thermische Behand-lung bei Temperaturen zwischen 871°C (1600°F) und 982°C (1800°F) werden dann den "Grünbriketts" vorhandene flüchtige Bestandteile ausgetrieben und schließlich bei gleichzeitiger Reduktion des Eisenoxids mechanisch feste Briketts mit einem hohen Anteil (über 90 %) an metallischem Eisen erzeugt, die zur weiteren Verwendung bei der Stahlerzeugung eingesetzt werden können.

Ein ähnliches Verfahren ist aus der US-A-1661636 bekannt, wobei eisenhaltiger Flugstaub aus beispielsweise einem Hochofen mit zerkleinertem Eisenerz und zerkleinerter Kohle oder Koks vermischt und diese Mischung mit Hilfe eines Bindemittels, beispielsweise Teerpech, zu Briketts verpresst wird. Durch eine nachfolgende thermische Behandlung bei ca. 1000 °F werden unter Austreibung von vorhandenen flüchtigen Bestandteilen mechanisch feste Briketts erhalten, die sich dann beispielsweise zum Einsatz in einem Hochofen oder einem Schmelzofen eignen.

Aus der JP-B-490155529 ist ein Verfahren bekannt, bei dem Nickel und Chrom enthaltenden Elektrostäuben ein Reduktionsmittel (charcoal, coke, carbon black, o. ä.) zugemischt, die Mischung mit einem Bindemittel (Teer) pelletiert und die erhaltenen Pellets in einem Vakuumofen zu einer metallischen Legierung reduziert werden. Durch die thermische Behandlung unter Vakuum enthält die Legierung nur noch geringe Gehalte an schädlichen Stoffen wie beispielsweise Pb, Zn, Sn und kann somit bei der Edelstahlerzeugung wieder eingesetzt werden.

In der RU-A-2123029 wird die Herstellung von Briketts beschrieben, bestehend aus metallurgischen Abfallprodukten, einem Kohlenstoffträger (Koks, Feinkohle) sowie Kalk unter Zusatz eines Bindemittels (Melasse), die nach einer thermischen Behandlung zwischen 250 - 700 °C über wenigstens 5 Minuten und einer anschließenden Kühlung als Brennstoff, als Reduktionsmittel oder als Metallträger bei der Gusseisenproduktion eingesetzt werden.

In der EP-A-275863 wird ein Verfahren zur Wiedergewinnung von Wertstoffen aus Abfallstoffen, wie beispielsweise Flugstäube eines Elektro-Lichtbogenofens (EAF) beschrieben, die umweltschädliche Stoffe enthalten, wobei die Stäube mit einem kohlenstoffhaltigen Reduktionsmittel vermischt, mit einem Bindemittel (Cellulose) pelletiert und die Pellets nach einer Trocknung dann chargenweise in einem Schmelzofen bei 1050 °C bis 1150 °C reduziert und bei 1500 °C bis 1650 °C aufgeschmolzen werden. Die Schmelze, die die metallischen Wertstoffe enthält, wird ausgegossen, gekühlt und dann weiteren Verwendungszwecken zugeführt, während die verflüchtigten umweltschädlichen Inhaltstoffe als aufkonzentrierte Stäube aufgefangen und der Blei-Zink-Industrie zugeführt werden.

Bei diesen bekannten Verfahren zur Rückgewinnung von Wertstoffen aus Abfallstäuben bedient man sich des kostenintensiven Zwischenschritts des Stückigmachens der Stäube mittels Brikettierung oder Pelletierung und der nachfolgenden Reduktion der in oxidischer Form vorliegenden Wertstoffe durch eine externe thermische Behandlung der mechanisch festen Briketts bzw. Pellets.

Der Erfindung liegt daher die Aufgabe zugrunde, ein Verfahren zur Behandlung wertstoffhaltigen Staubes, insbesondere zum Einsatz bei der Behandlung von bei der Stahlherstellung anfallendem Staub, anzugeben, mit dem auf besonders einfache und kostengünstige Weise eine Rückgewinnung hochwertiger metallischer Bestandteile aus dem Staub ermöglicht ist.

Diese Aufgabe wird erfindungsgemäß dadurch gelöst, dass in der Art eines Recyclings
- den Stäuben ein kohlenwasserstoffhaltiges organisches Reduktionsmittel und gegebenenfalls ein die Reduktion begünstigender Zusatzstoff zugemischt,
- das erhaltene Gemisch mit mindestens einem Gewichtsanteil von 25 % an kohlenwasserstoffhaltigen Reduktionsmitteln in einen Elektrolichtbogenofen auf dessen Flachbad chargiert und dort durch eine Wärmebehandlung reduziert wird, und
- die durch die Reduktion aus den Stäuben gebildeten metallischen Wertstoffe im Elektrolichtbogenofen verbleiben und dort unmittelbar in die weitere Stahlherstellung eingebunden werden.

Die Erfindung geht dabei von der Überlegung aus, dass eine zuverlässige und kostengünstige Rückgewinnung der wertstoffhaltigen Bestandteile aus den genannten Stäuben erfolgen kann, indem diese einer geeigneten Reduktionsbehandlung unterzogen werden und die durch die Reduktion gebildeten metallischen Wertstoffe am Reduktionsort verbleiben. Für ein besonders günstiges Reduktionsverfahren sollte dabei ein geeignetes kostengünstig bereitstellbares Reduktionsmittel gewählt werden. Dies ist unter weitestmöglichem Verzicht auf die genannten ferneren Komponentsysteme ermöglicht, indem diese durch ein geeignetes organisches Material ersetzt werden. Um eine zuverlässige Reduktion der Metalloxide sicher zu gewährleisten, sollte dabei der Gewichtsanteil des als Reduktionsmittel vorgesehenen organischen Materials mindestens 25% des Gemisches betragen. Vorzugsweise liegt dieser Gewichtsanteil bei etwa 25% bis 30% des Gemisches.

Vorteilhafterweise wird das Verfahren bei der Behandlung von Staub eingesetzt, der bei der Stahlherstellung anfällt. Demzufolge weist der Staub zweckmäßigerweise Anteile von Chromoxid (Cr₂O₃) und/oder von Nickeloxid (NiO) auf.

Als besonders geeignetes, auf günstige Weise bereitstellbares Reduktionsmittel ist vorteilhafterweise Melasse (C₁₂H₂₂O₁₁) vorgesehen. In weiterer oder alternativer vorteilhafter Ausgestaltung umfasst das Reduktionsmittel Öl (CₙHₙ), das den Staub in Form von Buttersäure (C₄H₉COOH), Palmitinsäure (C₁₅H₃₁COOH), Stearinsäure (C₁₇H₃₅COOH), Ölsäure (C₁₇H₃₃COOH) und/oder Linolsäure (C₁₇H₃₁COOH) zugeführt wird.

In weiterer vorteilhafter Ausgestaltung wird den Reduktionsmittel ein den Reduktionsvorgang begünstigender Zusatzstoff zugemischt. Der Zusatzstoff umfasst dabei zweckmäßigerweise Anteile von Koks, Graphit, Aluminium und/oder Silizium. Diese Anteile liegen dabei vorteilhafterweise in geeigneter chemischer Form vor.

Insbesondere bei der Zumischung des Zusatzstoffes kann das Verfahren vorteilhafterweise zur Behandlung von Filterstaub mit einer Korngröße von mehr als 3mm als Nebenprodukt von Behandlungen von niedrig legierten oder hoch legierten Cr-Stahlschmelzen mit einem Gehalt an Chromoxid (Cr₂O₃) von 0,1% bis 20% zum Einsatz kommen.

Zur besonders einfachen Durchführung des Verfahrens wird das Gemisch aus Reduktionsmitteln, Staub und bedarfsweise Zusatzstoff mittels eines Drehtellers oder Mischers erzeugt. Dabei kann das Gemisch auch einem Trocknungsvorgang ausgesetzt werden. Alternativ kann das Gemisch auch in einem herkömmlichen Betonmischer hergestellt werden, wobei ein Trocknungsvorgang auch entfallen kann.

Die zur eigentlichen Reduktion der im Staub enthaltenen Metalloxidbestandteile vorgesehene Wärmebehandlung wird zweckmäßigerweise in einem Elektrolichtbogenofen vorgenommen. Das Gemisch wird dem Elektrolichtbogenofen dabei vorteilhafterweise über eine seitlich an diesem angeordnete Förderrinne zugeführt oder über eine Zuführlanze in diesen eingeblasen. Alternativ kann das Zuführen in den Elektrolichtbogenofen auch in der Art einer Chargierung im ersten oder zweiten Förderkorb oder durch Einblasen in ein Deckelloch erfolgen. Zusätzlich oder alternativ kann der behandelte Staub auch während des Einschmelzens bei der Stahlherstellung, nämlich wenn sich genügend flüssiger Stahl im Elektrolichtbogenofen befindet, oder auch nach dem Einschmelzen auf ein zur Zuführung ohnehin vorgesehenes Flachband begeben werden.

Die mit der Erfindung erzielten Vorteile bestehen insbesondere darin, daß die Rückgewinnung der wertstoffhaltigen Bestandteile aus dem Staub durch den Ersatz konventioneller Reduktionsmittel durch vergleichsweise kostengünstige Rohstoffe bei zuverlässiger Reduktion vergleichsweise kostengünstig und besonders einfach erfolgen kann. Insbesondere ist für das Gemisch aus Reduktionsmittel und zu behandelndem Staub vor der Einleitung des Reduktionsvorgangs ein Trocknungsvorgang nicht unbedingt erforderlich. Somit ist ein zuverlässiges Recycling von einerseits umweltschädlichen, andererseits aber wertvollen sekundärmetallurgischen Filterstäuben, insbesondere mit einer Korngröße von mehr als 3mm, und insbesondere als Nebenprodukt von Behandlungen von niedrig legierten oder hoch legierten Cr-Stahlschmelzen, ermöglicht. Gerade durch die Verwendung eines organischen Reduktionsmittels fallen zudem die Restprodukte der Reduktion, nämlich nicht verwertbare Elektrolichtbogenschfacken, nur in einem besonders geringen Maße an und werden zu einem großen Teil durch gasförmiges Kohlenmonoxid und Wasserdampf ersetzt.

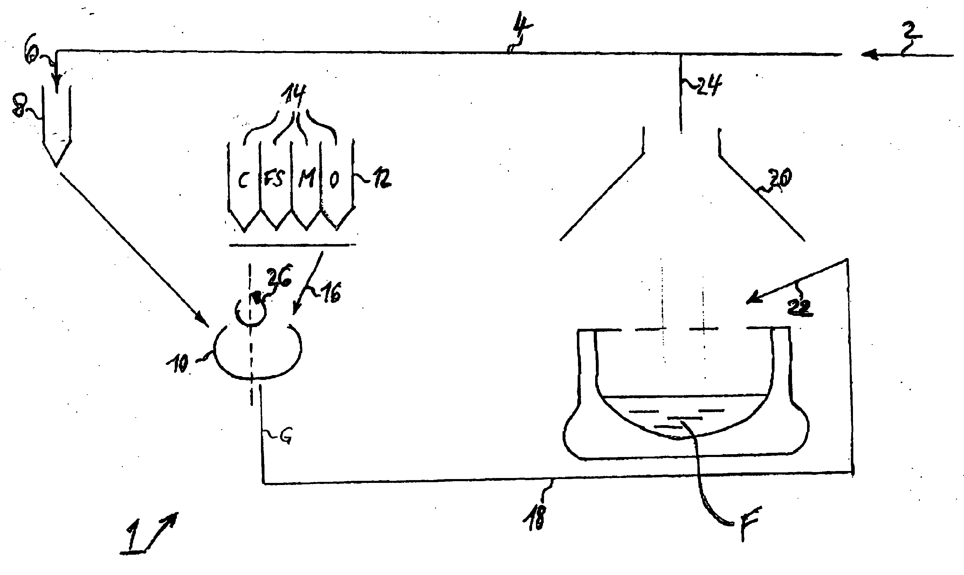

Ein Ausführungsbeispiel der Erfindung wird anhand einer Zeichnung näher erläutert. Darin zeigt die Figur schematisch ein System zur Behandlung wertstoffhaltigen Staubes.

Das System 1 zur Behandlung wertstoffhaltigen Staubes ist einer nicht näher dargestellten Produktionsanlage zur Herstellung von Stahl zugeordnet. In der Produktionsanlage anfallender, durch den Pfeil 2 dargestellter Staub wird dabei über einen Entstaubungsstrang 4 geführt. Der Entstaubungsstrang 4 mündet in einen Auslaß 6, über den der Staub in einen Sammelbehälter 8 einbringbar ist.

Aus dem Sammelbehälter 8 ist der Staub in eine Mischeinrichtung 10 eindringbar. Die Mischeinrichtung 10 ist dabei im Ausführungsbeispiel als Drehteller ausgebildet. Alternativ kann aber auch ein herkömmlicher Betonmischer oder ein anderes geeignetes Mischsystem als Mischeinrichtung 10 vorgesehen sein.

Der Mischeinrichtung 10 ist in der Art einer Bunkeranlage ein Vorhaltesystem 12 zugeordnet. Das Vorhaltesystem 12 umfaßt eine Anzahl von Lagerkammern 14, in denen verschiedenartige Nutzstoffe abrufbar eingelagert sind. Die jeweiligen Nutzstoffe sind aus den Lagerkammern 14 über ein Zuführsystem 16 in die Mischeinrichtung 10 einbringbar.

Ausgangsseitig ist die Mischeinrichtung 10 über ein Zuführsystem 18 an einen Elektrolichtbogenofen 20 angeschlossen. Der Elektrolichtbogenofen 20 kann dabei auch in sonstiger Weise an weitere Einrichtungen der Produktionsanlage zur Herstellung von Stahl angeschlossen sein und insbesondere zur Durchführung entsprechender Zwischenschritte bei dem eigentlichen Stahlherstellungsprozeß ausgelegt sein.

Im Ausführungsbeispiel ist das Zuführsystem 18 derart an den Elektrolichtbogenofen 20 angeschlossen, daß über das Zuführsystem 18 geführtes Material über eine seitlich am Elektrolichtbogenofen 20 angeordnete, durch den Pfeil 22 dargestellte Förderrinne in den Elektrolichtbogenofen einbringbar ist. Alternativ kann das Zuführsystem 18 aber auch an eine Zuführlanze des Elektrolichtbogenofens 20 angeschlossen sein, über die im Zuführsystem 18 geführtes Material in den Elektrolichtbogenofen 20 einblasbar ist. Alternativ kann das Zuführsystem 18 weiterhin mit einer Anzahl von dem Elektrolichtbogenofen 20 zugeordneten Chargierkörben verbunden sein, über die im Zuführsystem 18 geführtes Material in den Elektrolichtbogenofen zuführbar ist.

Ausgangsseitig ist der Elektrolichtbogenofen 20 über eine Staubableitung 24 an den Entstaubungsstrang 4 angeschlossen.

Beim Betrieb der Produktionsanlage zur Herstellung von Stahl und des dieser zugeordneten Systems 1 wird bei der Produktion von Stahl anfallender wertstoffhaltiger Staub über den Entstaubungsstrang 4 in den Sammelbehälter 8 eingebracht. Von dort wird der Staub bedarfsweise und angepaßt an den Produktionsprozeß in die Mischeinrichtung 10 verbracht, wo er mit im Vorhaltesystem 12 vorgehaltenem Reduktionsmittel vermischt wird. Dabei werden in einer der Lagerkammern 14 Kohlenstoff C als Zusatzstoff, in einer zweiten Lagerkammer 14 Ferrositizium FS als Zusatzstoff, in einer weiteren Lagerkammer 14 Melasse M als Reduktionsmittel und in einer weiteren Lagerkammer 14 Öl O als Reduktionsmittel vorgehalten. Dem der Mischeinrichtung 10 zugeführten Staub wird dabei zunächst als kohlenwasserstoffhaltiges Reduktionsmittel Melasse M und/oder Öl O derart beigemischt, daß das entstehende Gemisch G einen Gewichtsanteil des kohlenwasserstoffhaltigen Reduktionsmittels Melasse M bzw. ÖlO von mindestens 25% aufweist. Zur Förderung des eigentlichen Reduktionsvorgangs wird zudem eine geeignete Menge von Graphit oder Kohlenstoff C und/oder Ferrosilizium FS zugemischt.

Das aus diesen Komponenten gebildete Gemisch G wird in der Mischeinrichtung 10 gemischt, umgewälzt und homogenisiert. Dies geschieht in der Mischeinrichtung 10 über eine durch den Pfeil 26 symbolisierte Dreh- oder Rotationsbewegung. Alternativ oder zusätzlich kann die Mischeinrichtung 10 noch in der Art einer Pelletieranlage eine Verdichtungseinheit zum Verpressen von Chargen des Gemisches G in Tablettenform und/oder eine Verpackungsanlage umfassen.

Das in der Mischeinrichtung 10 erzeugte Gemisch G wird über das Zuführsystem 18 in den Elektrolichtbogenofen 20 eingespeist und dort einer Wärmebehandlung unterzogen. Dabei findet eine Reduktion der wertstoffhaltigen Bestandteile des Staubes mit dem im Gemisch G enthaltenen kohlenwasserstoffhaltigen Reduktionsmittel statt. Die Reduktionsreaktion läßt sich dabei zusammengefaßt wie folgt charakterisieren:

Melasse + Öl + [Al]+[Si]+(Cr₂O₃)+(FeO) = [Cr]+[Fe]+[CO]+[H₂O]

Bei der Verwendung von Melasse M als Reduktionsmittel ergibt sich dabei folgende Reaktion:

8[C]+(C₁₂H₂₂O₁₁)+5(FeO)+5(Cr₂O₃) = 10[Cr]+5[Fe]+20{CO}+11{H₂O}

Bei Verwendung von ÖlO als Reduktionsmittel kann dieses in Form von Buttersäure (C₄H₉COOH), Palmitinsäure (C₁₅H₃₁COOH), Stearinsäure (C₁₇H₃₅COOH), Ölsäure (C₁₇H₃₃COOH) und/oder Linolsäure (C₁₇H₃₁COOH) eingebracht werden.

Bei vollendeter Reduktionsreaktion entstehen somit neben den für die weitere Stahlherstellung als Wertstoffe erachteten elementaren Metallen Chrom (Cr) und Eisen (Fe) lediglich Kohlenmonoxid (CO) und Wasser (H₂O) als Abfallstoffe. Somit liegen keine umweltbelastenden Reststoffe vor.

Die Aufbereitung des Gemisches G aus dem wertstoffhaltigen Staub und dem entsprechenden Reduktionsmittel in der Mischeinrichtung 10 kann insbesondere ohne nachgeschalteten Trocknungsvorgang vorgenommen werden. Das Chargieren des so gewonnenen Gemisches G in den Elektrolichtbogenofen 20 über die durch den Pfeil 22 dargestellte Förderrinne, über Chargierkörbe oder über ein Deckelloch erfolgt dabei auf ein sogenanntes Flachbad F im Elektrolichtbogenofen 20, nämlich nachdem dort die Schmelze einen flüssigen Zustand erreicht hat. Somit kann der durch den Reduktionsvorgang aus dem Staub erhaltene Wertstoff unmittelbar in die Stahlherstellung im Elektrolichtbogen 20 eingebunden werden; eine Weiter- oder Zwischenverarbeitung der wertstoffhaltigen Bestandteile ist nicht weiter erforderlich.

### Bezugszeichenliste

- 1: System
- 2: Pfeil
- 4: Entstaubungsstrang
- 6: Auslaß
- 8: Sammelbehälter
- 10: Mischeinrichtung
- 12: Vorhaltesystem
- 14: Lagerkammer
- 16/18: Zuführsystem
- 20: Elektrolichtbogenofen
- 22: Pfeil
- 24: Staubableitung
- F: Flachbad
- G: Gemisch

## Patentansprüche

1. Verfahren zur Rückgewinnung hochwertiger metallischer Bestandteile aus bei der Stahlherstellung anfallenden Stäuben, insbesondere sogenannten sekundärmetallurgischen Filterstäuben, welche Metalloxide wie beispielsweise Eisenoxid und/oder Manganoxid und/oder Chromoxid und/oder Nickeloxid enthalten, durch ein Reduktionsverfahren mit einer Wärmebehandlung der Stäube, **dadurch gekennzeichnet, dass** in der Art eines Recyclings
• den Stäuben ein kohlenwasserstoffhaltiges organisches Reduktionsmittel und gegebenenfalls ein die Reduktion begünstigender Zusatzstoff zugemischt,
• das erhaltene Gemisch (G) mit mindestens einem Gewichtsanteil von 25 % an kohlenwasserstoffhaltigen Reduktionsmitteln in einen Elektrolichtbogenofen (20) auf dessen Flachbad (F) chargiert und dort durch eine Wärmebehandlung reduziert wird, und
• die durch die Reduktion aus den Stäuben gebildeten metallischen Wertstoffe im Elektrolichtbogenofen (20) verbleiben und dort unmittelbar in die weitere Stahlherstellung eingebunden werden.

2. Verfahren nach Anspruch 1, **dadurch gekennzeichnet, dass** das organische Reduktionsmittel Melasse (C₁₂H₂₂O₁₁) ist.

3. Verfahren nach Anspruch 1, **dadurch gekennzeichnet, dass** das organische Reduktionsmittel ein Öl (CₙHₙ) ist.

4. Verfahren nach Anspruch 3, **dadurch gekennzeichnet, dass** das Öl dem Staub in Form von Buttersäure (C₄H₉COOH), Palmitinsäure (C₁₅H₃₁COOH), Stearinsäure (C₁₇H₃₅COOH), Ölsäure (C₁₇H₃₃COOH) und/oder Linolsäure (C₁₇H₃₁COOH) zugeführt wird.

5. Verfahren nach Anspruch 1, 2, 3 oder 4, **dadurch gekennzeichnet, dass** insbesondere bei Filterstaub mit einer Korngröße von mehr als 3 mm dem organischen Reduktionsmittel ein die Reduktion begünstigender Zusatzstoff, der Koks, Graphit (C), Aluminium (Al) und/oder Silizium (Si) bzw. Ferrosilizium (FS) enthält, zugemischt wird.

6. Verfahren nach einem oder mehreren der Ansprüche 1 bis 5, **dadurch gekennzeichnet, dass** zur Herstellung des Gemisches (G) ein herkömmlicher Betonmischer oder ein Drehteller als Mischeinrichtung (10) verwendet wird.

7. Verfahren nach einem oder mehreren der Ansprüche 1 bis 6, **dadurch gekennzeichnet, dass** das Gemisch (G) dem Elektrolichtbogenofen (20) über eine seitlich an diesem angeordnete Förderrinne zugeführt wird.

8. Verfahren nach einem oder mehreren der Ansprüche 1 bis 6, **dadurch gekennzeichnet, dass** das Gemisch (G) über eine Zuführlanze in den Elektrolichtbogenofen (20) eingeblasen wird.

## Claims

1. Method for recovery of high-value metallic components from dusts occurring in steel production, particularly so-called secondary metallurgical filter dusts which contain metal oxides such as, for example, ion oxide and/or manganese oxide and/or chromium oxide and/or nickel oxide, by a reduction method with a thermal treatment of the dusts, **characterised in that** in the manner of a recycling process
- the dusts are admixed to an organic reduction agent containing hydrocarbon and optionally to an additive promoting the reduction,
- the obtained mixture (G) with at least a weight proportion of 25% of reduction agents containing hydrocarbon is charged into an electric arc furnace (20) onto the flat bath (F) thereof and is there reduced by a thermal treatment, and
- the metallic valuable substances formed by the reduction from the dusts remain in the electric arc furnace (20) and are there directly incorporated into the further steel production.

2. Method according to claim 1, **characterised in that** the organic reduction agent is molasses (C₁₂H₂₂O₁₁).

3. Method according to claim 1, **characterised in that** the organic reduction agent is an oil (CₙHₙ).

4. Method according to claim 3, **characterised in that** the oil is added to the dust in the form of butyric acid (C₄H₉COOH), palmitic acid (C₁₅H₃₁COOH), stearic acid (C₁₇H₃₅COOH), oleic acid (C₁₇H₃₃COOH) and/or linoleic acid (C₁₇H₃₁COOH).

5. Method according to claim 1, 2, 3 or 4, **characterised in that** an additive promoting reduction, which contains coke, graphite (C), aluminium (Al) and/or silicon (Si) or ferrosilicon (FS), is admixed to the organic reduction agent particularly in the case of filter dust with a grain size greater than 3 millimetres.

6. Method according to one or more of claims 1 to 5, **characterised in that** a conventional concrete mixer or a turntable is used as mixing device (10) for producing the mixture (G).

7. Method according to one or more of claims 1 to 6, **characterised in that** the mixture (G) is fed to the electric arc furnace (20) by way of a conveyor channel arranged laterally thereat.

8. Method according to one or more of claims 1 to 6, **characterised in that** the mixture (G) is blown into the electric arc furnace (20) by way of a feed lance.

## Revendications

1. Procédé de traitement de composantes métalliques de produits recyclables issus de poussières émises lors de la fabrication d'acier, notamment de poussières dites de filtrage métallurgique secondaire, qui contiennent des oxydes métalliques comme par exemple de l'oxyde de fer et/ou de l'oxyde de manganèse et/ou de l'oxyde de chrome et/ou de l'oxyde de nickel, par procédé de réduction avec un traitement thermique des poussières, **caractérisé en ce qu'**à la manière d'un recyclage,
● on mélange aux poussières un agent réducteur organique contenant des hydrocarbures et éventuellement un additif favorisant la réduction,
● le mélange obtenu (G) est chargé avec au moins une proportion en poids de 25 % d'agent réducteur organique contenant des hydrocarbures dans un four à arc électrique (20) sur son bain plat (F) et y est réduit par traitement thermique et
● les produits métalliques recyclables obtenus par la réduction restent dans le four à arc électrique (20) et y sont intégrés directement dans la fabrication ultérieure d'acier.

2. Procédé selon la revendication 1, **caractérisé en ce que** l'agent réducteur organique est de la mélasse (C₁₂H₂₂O₁₁).

3. Procédé selon la revendication 1, **caractérisé en ce que** l'agent réducteur organique est une huile (CₙHₙ).

4. Procédé selon la revendication 3, **caractérisé en ce que** l'huile est ajoutée à la poussière sous forme d'acide butyrique (C₄H₉COOH), d'acide palmitique (C₁₅H₃₁COOH), d'acide stéarique (C₁₇H₃₅COOH), d'acide oléique (C₁₇H₃₃COOH) et/ou d'acide linoléique (C₁₇H₃₁COOH).

5. Procédé selon la revendication 1, 2, 3 ou 4, **caractérisé en ce que**, notamment en cas de poussière de filtrage d'une granulométrie supérieure à 3 mm, on mélange à l'agent réducteur organique un additif favorisant la réduction, qui contient du coke, du graphite (C), de l'aluminium (Al) et/ou du silicium (Si) ou du ferrosilicium (FS).

6. Procédé selon une ou plusieurs des revendications 1 à 5, **caractérisé en ce que**, pour préparer le mélange (G), on utilise un mélangeur de béton traditionnel ou un plateau tournant comme dispositif de mélange (10).

7. Procédé selon une ou plusieurs des revendications 1 à 6, **caractérisé en ce que** le mélange (G) est acheminé au four à arc électrique (20) par une rigole de convoyage disposée sur le côté de celui-ci.

8. Procédé selon une ou plusieurs des revendications 1 à 6, **caractérisé en ce que** le mélange (G) est soufflé par une lance d'alimentation dans le four à arc électrique (20).
